# EUROPEAN PATENT SPECIFICATION

(11) **EP 3 142 875 B1**
(45) Date of publication and mention of the grant of the patent: **28.07.2021**
(21) Application number: 15726427.6
(22) Date of filing: 07.05.2015
(51) Int. Cl.: B60H 1/32, F02D 29/02, F25B 49/02

(54) **VEHICLE REFRIGERATION SYSTEM**
KÜHLSYSTEM FÜR EIN FAHRZEUG
SYSTÈME DE RÉFRIGÉRATION DE VÉHICULE

(30) Priority: 16.05.2014 CN 201410207053
(43) Date of publication of application: 22.03.2017
(73) Proprietor: Carrier Corporation, Farmington, Connecticut 06032 (US)
(72) Inventor: CHEN, Linhui, Shanghai 201206 (CN)
(74) Representative: Schmitt-Nilson Schraud Waibel Wohlfrom Patentanwälte Partnerschaft mbB
(86) International application number: PCT/US2015/029570
(87) International publication number: WO 2015/175290

(56) References cited:
- EP-A1- 0 503 088
- US-A- 5 186 015
- US-A- 5 629 568
- US-A1- 2003 079 718

## Description

### BACKGROUND

### Technical Field

The present invention relates to the field of vehicles, and particularly, to a vehicle refrigeration system.

### RELATED ART

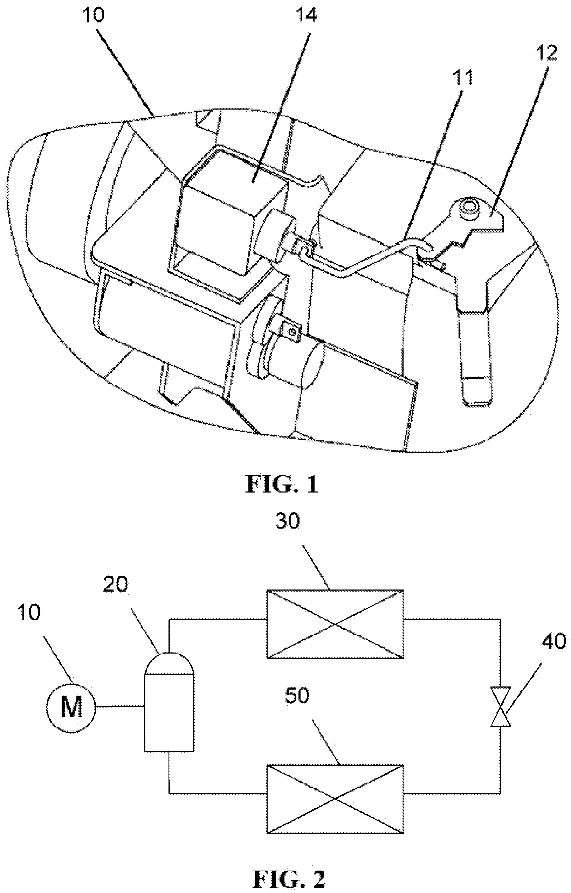

Currently, in order to ensure better preservation of goods, the existing vehicles generally have a vehicle refrigeration system. The vehicle refrigeration system typically includes conventional refrigeration elements, such as a compressor, a condenser, a throttling element and an evaporator that are connected in sequence through a pipeline, where the compressor of the vehicle refrigeration system is generally an open type compressor, and with such a design, the compressor can be connected to an engine and is linked with rotation of the engine. Moreover, the engine currently used in the vehicle refrigeration system generally does not have a variable speed part or only has a simple variable speed element, for example, an electromagnetic coil 14 (as shown in FIG. 1). Through energization or de-energization of the electromagnetic coil 14, pull-in or release thereof on a connecting rod 11 can be achieved, so as to drive an engine speed regulating handle 12 to be pivoted to different positions to achieve regulation on the speed of the engine. However, the solution has the following problems:
In the prior art, the engine can only achieve a speed change between two gears, that is, a high gear and a low gear, where at the low gear, the engine runs at a lower speed, so that an operating effect of the vehicle refrigeration system is very poor. Therefore, a driver will generally take into account use of the low gear for operation only when it is necessary to reduce noise of the refrigeration system, for example, when a vehicle is running in a city.

In addition, such a speed change between two gears is not applicable to some extreme environments where a refrigeration system is needed. For example, under some extreme working conditions where an outdoor environment is at a temperature up to 50°C, if the engine is running using the low gear, it is difficult to achieve driving of the refrigeration system or a problem arises that refrigerating capacity is too low to meet demands; if the engine is running using the high gear, it is easy to produce higher suction/discharge pressure, so as to result in excessive power demands, and thus it is necessary to use a CPR (compressor suction pressure regulating valve) or SMV (motor-driven compressor suction pressure regulating valve) to regulate the suction/discharge pressure; the use of the pressure regulating valves not only increases the cost but also, due to their existence, affects and reduces the refrigerating capacity of the vehicle refrigeration system under common working conditions.

Moreover, the solution has a poor thermostatic effect, and in order to maintain a compartment temperature within a certain range, the vehicle refrigeration system can only maintain the temperature within a set range in a manner of first using
the high gear for refrigeration and then shutting down or using the low gear or converting to heating.

US2003/079718A1 shows an engine control apparatus which reduces a driver's feeling of wrongness in a vehicle equipped with an air-conditioning apparatus. A larger one of a first load torque estimated value obtained by estimating a compressor load torque of the air conditioner based on a refrigerant pressure, and a second load torque estimated value obtained by estimating a load torque of the compressor based on an outside air temperature is selected as an air conditioner load to an engine control unit, and an engine output is corrected by using the air conditioner load.

To sum up, there is a need for a vehicle refrigeration system having a multistep or stepless speed change.

### SUMMARY

An objective of the present invention is to provide a vehicle refrigeration system and a vehicle having the same, which can solve technical problems that exist in the existing vehicle refrigeration system, for example, the vehicle refrigeration system has poor regulation capability, is not applicable to extreme working conditions and the like.

According to the present invention as defined in claim 1, a vehicle refrigeration system is provided, including: a refrigeration module which has a compressor, a condenser, a throttling element and an evaporator that are connected in sequence through a pipeline; and a power module which has an engine linked to the compressor; where the engine has a variable speed component which is capable of causing the engine to run at a multistep or stepless speed.

The variable speed component includes a variable speed drive unit and a speed regulating handle pivotally connected to each other; the speed regulating handle is capable of pivoting about the engine, and different pivoting positions thereof correspond to different rotating speeds of the engine; and the variable speed drive unit is mounted about the engine, and configured to drive the speed regulating handle to different pivoting positions.

The variable speed drive unit includes a stepper motor and a connecting rod, a first end of the connecting rod is pivotally connected to the stepper motor, and a second end of the connecting rod is pivotally connected to the speed regulating handle.

Optionally, the engine and the compressor are connected through a belt pulley or shaft.

The vehicle refrigeration system according to the invention further includes a control module which has: an environmental parameter sensor configured to detect a working environment parameter; an operating parameter sensor configured to detect a system operating parameter; and a control unit configured to control the variable speed component according to the working environment parameter and the system operating parameter.

Optionally, the operating parameter sensor includes: a first temperature sensor disposed on the evaporator and configured to detect a return air temperature passing through the evaporator; and/or a first pressure sensor disposed at a suction port of the compressor and configured to detect suction pressure of the compressor.

Optionally, the environmental parameter sensor includes a second temperature sensor disposed on an outer side of the vehicle refrigeration system and configured to detect a working environment temperature.

According to another aspect of the present invention, a vehicle is further provided, which includes the vehicle refrigeration system as described above.

By means of the vehicle refrigeration system of the present invention, a multistep or stepless speed change is provided, so as to achieve adjustability on refrigerating capability of the refrigeration system. In this way, the compressor in the vehicle refrigeration system can operate at an appropriate speed, so as to meet different refrigerating demands, thereby achieving more stable and precise temperature control and saving fuel consumption. The refrigerating capacity, maximum operating pressure and operating power consumption of the vehicle refrigeration system are changed through variable speed control, so that the vehicle refrigeration system can adapt to a variety of adverse working conditions, which can thus save out the CPR and the SMV, reduce the system cost and increase the refrigerating capacity of the refrigeration system under general environmental working conditions. The vehicle according to the present invention also has the foregoing technical effect due to the use of the vehicle refrigeration system of the present invention.

### BRIEF DESCRIPTION OF THE DRAWINGS

FIG. 1 is a schematic diagram of an engine in a vehicle refrigeration system in the prior art;
FIG. 2 is a schematic diagram of a vehicle refrigeration system according to the present invention; and
FIG. 3 shows an embodiment of a variable speed component according to the present invention.

### DETAILED DESCRIPTION

FIG. 2 shows an embodiment of a vehicle refrigeration system according to the present invention. The vehicle refrigeration system includes a compressor 20, a condenser 30, a throttling element 40 and an evaporator 50 that are connected in sequence through a pipeline; in addition, an engine 10 in the vehicle refrigeration system is linked to the compressor 20, and operation of the engine 10 drives the compressor 20 to operate, so as to achieve a refrigerating function of the refrigeration system. The engine 10 and the compressor 20 may be connected in manner manners, for example, they are connected through a belt pulley or directly connected through a shaft, as long as the connecting manner can achieve linkage between them. It should be aware that, in order to facilitate the connection between the engine 10 and the compressor 20, the compressor 20 is generally an open type compressor.

In the present invention, the engine 10 is internally provided with a variable speed component which is capable of causing the engine 10 to run at a multistep or stepless speed. With the help of the variable speed component, the rotating speed of the engine 10 can be changed, so as to change an operating speed of the compressor 20, thereby achieving an effect of regulating the refrigerating capacity of the refrigeration system. The variable speed component is a set of components capable of adjusting the degree of opening of an oil feeding port of the engine. More specifically, the variable speed component includes a variable speed drive unit and a speed regulating handle pivotally connected to each other; the speed regulating handle is further pivotally connected to a pivot at a corresponding position on the engine and achieve the purpose of adjusting the degree of opening of the oil feeding port of the engine by rotating back and forth about the pivot, and different pivoting positions thereof correspond to different degrees of opening of the oil feeding port, so as to correspond to different rotating speeds of the engine. The other element of the variable speed component, that is, the variable speed drive unit, is mounted about the engine, and configured to provide power for the speed regulating handle, so as to drive the speed regulating handle to different pivoting positions. There may be a variety of options for the variable speed drive unit, as long as the variable speed drive unit can drive and pivot the speed regulating handle. By means of the variable speed component, a speed change on the engine is achieved, so as to achieve the effect of changing the refrigerating capacity of the vehicle refrigeration system.

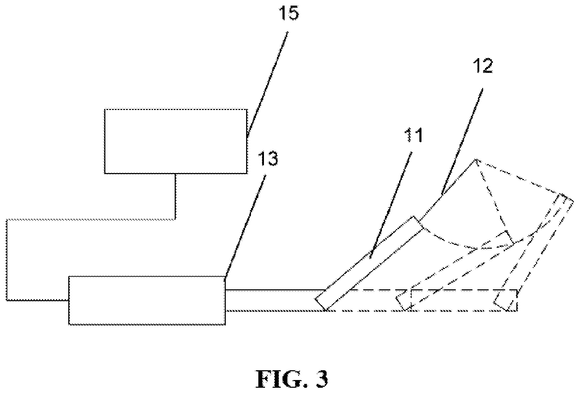

Next, in combination with FIG. 3, FIG. 3 specifically illustrates an embodiment according to the invention of a variable speed component. The variable speed component includes a connecting rod 11, a speed regulating handle 12 and a stepper motor 13. The stepper motor 13 is fixed into the engine; it is worth noting that, the stepper motor may be disposed at a position in the engine where it was intended to dispose an electromagnetic coil, and with such a design, the very mature engine layout in the prior art will be changed as little as possible, which significantly increases its applicability. One end of an output shaft of the stepper motor is pivotally connected to a first end of the connecting rod 11; and a second end of the connecting rod 11 is pivotally connected to the speed regulating handle 12. Through the connecting rod 11, linear motion of the stepper motor 13 can be converted to circular motion of the speed regulating handle 12, so as to achieve regulation of the speed regulating handle 12 on the degree of opening of the oil feeding port of the engine, thereby achieving a speed change of the engine. The present invention makes use of some elements which are more mature in the prior art, achieves the function of changing the rotating speed of the engine through reasonable arrangement of their connecting relations, so as to change the refrigerating capacity of the vehicle refrigeration system and further make the vehicle refrigeration system achieve more stable and accurate temperature control and applicable to an environment with extreme working conditions.

In addition, the vehicle refrigeration system of the present invention further includes a control module, which has an environmental parameter sensor configured to detect a working environment parameter; an operating parameter sensor configured to detect a system operating parameter; and a control unit 15 configured to control the variable speed component according to the working environment parameter and the system operating parameter. With the control module, the vehicle refrigeration system can be set to respond to what kind of feedback parameters in what operating mode according to requirements, so as to make it possible to take full advantage of the variable nature of the refrigerating capacity thereof and optimally determine the operating mode of the vehicle refrigeration system according to different actual situations of the place of use.

Optionally, the sensor may be configured as such: the operating parameter sensor includes a first temperature sensor and/or a first pressure sensor and/or a second pressure sensor; where the first temperature sensor is disposed on the evaporator and configured to detect a return air temperature passing through the evaporator; the first pressure sensor is disposed at a suction port of the compressor and configured to detect suction pressure of the compressor; and the second pressure sensor is disposed at a discharge port of the compressor and configured to detect discharge pressure of the compressor. Thus, operation of the vehicle refrigeration system can be regulated according to the detected temperature and the suction/discharge pressure of the vehicle refrigeration system, to prevent the vehicle refrigeration system from shutting down for some reasons and bring about more precise temperature control.

Optionally, the sensor may also be configured as such: the environmental parameter sensor includes a second temperature sensor disposed on an outer side of the vehicle refrigeration system and configured to detect a working environment temperature. As a result, when the vehicle refrigeration system is applied to an extremely adverse working condition (for example, at an extremely high temperature, such as 50°C), the vehicle refrigeration system is adjusted to have a moderate refrigerating capacity, so that the vehicle refrigeration system will neither bring about too large compressor suction/discharge pressure due to a too high refrigerating capacity to result in that the engine cannot produce a power sufficient to link the compressor, nor fail to meet demands of the working condition due to a too low refrigerating capacity; moreover, the SMV or CPR required by general vehicle refrigeration systems is omitted, so that excellent refrigerating effects can be brought about under harsh working conditions and general working conditions.

The specific implementation manners of the present invention are described as above in detail according to the accompanying drawings. Those skilled in the art can make equivalent modification or variation on specific features in the embodiments within the protection scope covered by the claims.

## Claims

1. A vehicle refrigeration system, comprising:
a refrigeration module which has a compressor (20), a condenser (30), a throttling element (40) and an evaporator (50) that are connected in sequence through a pipeline; and
a power module which has an engine (10) linked to the compressor (20);
wherein a variable speed component is further provided, which is capable of causing the engine (10) to run at a multistep or stepless speed; and
a control module having
an environmental parameter sensor configured to detect a working environment parameter,
an operating parameter sensor configured to detect a system operating parameter; and
a control unit (15) configured to control a variable speed component according to the working environment parameter and the system operating parameter;
wherein the variable speed component comprises a variable speed drive unit and a speed regulating handle (12) pivotally connected to each other;
wherein the speed regulating handle (12) is capable of pivoting about a pivot on the engine (10), and different pivoting positions thereof correspond to different rotating speeds of the engine (10); and
wherein the variable speed drive unit is mounted about the engine (10), and configured to drive the speed regulating handle to different pivoting positions;
wherein the variable speed component is configured to adjust a degree of opening of an oil feeding port of the engine (10); and
wherein the variable speed drive unit comprises a stepper motor (13) and a connecting rod (11), a first end of the connecting rod (11) is pivotally connected to the stepper motor (13), and a second end of the connecting rod (11) is pivotally connected to the speed regulating handle (12).

2. The vehicle refrigeration system according to claim 1, **characterized in that**, the engine (10) and the compressor (20) are connected through a belt pulley or shaft.

3. The vehicle refrigeration system according to claim 1 or 2, **characterized in that**, the operating parameter sensor comprises:
a first temperature sensor disposed on the evaporator and configured to detect a return air temperature passing through the evaporator; and/or
a first pressure sensor disposed at a suction port of the compressor and configured to detect suction pressure of the compressor; and/or
a second pressure sensor disposed at a discharge port of the compressor and configured to detect discharge pressure of the compressor.

4. The vehicle refrigeration system according to any one of claims 1 to 3, **characterized in that**, the environmental parameter sensor comprises a second temperature sensor disposed on an outer side of the vehicle refrigeration system and configured to detect a working environment temperature.

5. A vehicle, **characterized by** comprising the vehicle refrigeration system according to any one of claims 1 to 4.

## Patentansprüche

1. Fahrzeugkühlsystem, umfassend:
ein Kühlmodul, das einen Verdichter (20), einen Kondensator (30), ein Drosselungselement (40) und einen Verdampfer (50) aufweist, die der Reihe nach durch eine Rohrleitung verbunden sind; und
ein Leistungsmodul, das einen Motor (10) aufweist, der mit dem Verdichter (20) verbunden ist;
wobei ferner eine variable Drehzahlkomponente bereitgestellt wird, die in der Lage ist, zu bewirken, dass der Motor (10) bei mehrstufigen oder stufenlosen Drehzahlen läuft; und
ein Steuerungsmodul, das
einen Umgebungsparametersensor, der so konfiguriert ist, dass er einen Arbeitsumgebungsparameter erkennt,
einen Betriebsparametersensor, der so konfiguriert ist, dass er einen Systembetriebsparameter erkennt; und
eine Steuerungseinheit (15) aufweist, die so konfiguriert ist, dass sie eine variable Drehzahlkomponente gemäß dem Arbeitsumgebungsparameter und dem Systembetriebsparameter steuert;
wobei die variable Drehzahlkomponente eine Antriebseinheit mit variabler Drehzahl und einen Drehzahlregelungshebel (12) umfasst, die schwenkbar miteinander verbunden sind;
wobei der Drehzahlregelungshebel (12) in der Lage ist, um einen Drehpunkt an dem Motor (10) zu schwenken, und verschiedene Schwenkpositionen davon verschiedenen Drehzahlen des Motors (10) entsprechen; und
wobei die Antriebseinheit mit variabler Drehzahl um den Motor (10) montiert ist und so konfiguriert ist, dass sie den Drehzahlregelungshebel zu verschiedenen Schwenkpositionen bewegt;
wobei die variable Drehzahlkomponente so konfiguriert ist, dass sie einen Öffnungsgrad einer Ölzuführöffnung des Motors (10) anpasst; und
wobei die Antriebseinheit mit variabler Drehzahl einen Schrittmotor (13) und eine Verbindungsstange (11) umfasst, wobei ein erstes Ende der Verbindungsstange (11) schwenkbar mit dem Schrittmotor (13) verbunden ist und ein zweites Ende der Verbindungsstange (11) schwenkbar mit dem Drehzahlregelungshebel (12) verbunden ist.

2. Fahrzeugkühlsystem nach Anspruch 1, **dadurch gekennzeichnet, dass** der Motor (10) und der Verdichter (20) durch eine Riemenscheibe oder eine Welle verbunden sind.

3. Fahrzeugkühlsystem nach Anspruch 1 oder 2, **dadurch gekennzeichnet, dass** der Betriebsparametersensor Folgendes umfasst:
einen ersten Temperatursensor, der an dem Verdampfer angeordnet ist und so konfiguriert ist, dass er eine Rücklufttemperatur, die durch den Verdampfer strömt, erkennt; und/oder
einen ersten Drucksensor, der an einer Ansaugöffnung des Verdichters angeordnet ist und so konfiguriert ist, dass er einen Ansaugdruck des Verdichters erkennt; und/oder
einen zweiten Drucksensor, der an einer Auslassöffnung des Verdichters angeordnet ist und so konfiguriert ist, dass er einen Auslassdruck des Verdichters erkennt.

4. Fahrzeugkühlsystem nach einem der Ansprüche 1 bis 3, **dadurch gekennzeichnet, dass** der Umgebungsparametersensor einen zweiten Temperatursensor umfasst, der an einer Außenseite des Fahrzeugkühlsystems angeordnet ist und so konfiguriert ist, dass er eine Arbeitsumgebungstemperatur erkennt.

5. Fahrzeug, **dadurch gekennzeichnet, dass** es das Fahrzeugkühlsystem nach einem der Ansprüche 1 bis 4 umfasst.

## Revendications

1. Système de réfrigération de véhicule, comprenant :
un module de réfrigération qui a un compresseur (20), un condenseur (30), un élément d'étranglement (40) et un évaporateur (50) qui sont reliés en séquence à travers une canalisation ; et
un module de puissance qui a un moteur (10) lié au compresseur (20) ;
dans lequel un composant à vitesse variable est en outre prévu, qui est capable d'amener le moteur (10) à fonctionner à une vitesse à plusieurs étapes ou en continu ; et
un module de commande ayant
un capteur de paramètre d'environnement configuré pour détecter un paramètre d'environnement de travail,
un capteur de paramètre de fonctionnement configuré pour détecter un paramètre de fonctionnement du système ; et
une unité de commande (15) configurée pour commander un composant à vitesse variable en fonction du paramètre d'environnement de travail et du paramètre de fonctionnement du système ;
dans lequel le composant à vitesse variable comprend une unité d'entraînement à vitesse variable et une poignée de régulation de vitesse (12) reliées de manière pivotante l'une à l'autre ;
dans lequel la poignée de régulation de vitesse (12) est capable de pivoter autour d'un pivot sur le moteur (10), et différentes positions de pivotement de celle-ci correspondent à différentes vitesses de rotation du moteur (10) ; et
dans lequel l'unité d'entraînement à vitesse variable est montée autour du moteur (10), et configurée pour entraîner la poignée de régulation de vitesse vers différentes positions de pivotement ;
dans lequel le composant à vitesse variable est configuré pour ajuster un degré d'ouverture d'un orifice d'alimentation en huile du moteur (10) ; et
dans lequel l'unité d'entraînement à vitesse variable comprend un moteur pas à pas (13) et une bielle (11), une première extrémité de la bielle (11) est reliée de manière pivotante au moteur pas à pas (13), et une seconde extrémité de la bielle (11) est reliée de manière pivotante à la poignée de régulation de vitesse (12).

2. Système de réfrigération de véhicule selon la revendication 1, **caractérisé en ce que**, le moteur (10) et le compresseur (20) sont reliés par l'intermédiaire d'une poulie à courroie ou d'un arbre.

3. Système de réfrigération de véhicule selon la revendication 1 ou 2, **caractérisé en ce que**, le capteur de paramètre de fonctionnement comprend :
un premier capteur de température disposé sur l'évaporateur et configuré pour détecter une température d'air de retour passant à travers l'évaporateur ; et/ou
un premier capteur de pression disposé au niveau d'un orifice d'aspiration du compresseur et configuré pour détecter la pression d'aspiration du compresseur ; et/ou
un second capteur de pression disposé au niveau d'un orifice de refoulement du compresseur et configuré pour détecter la pression de refoulement du compresseur.

4. Système de réfrigération de véhicule selon l'une quelconque des revendications 1 à 3, **caractérisé en ce que**, le capteur de paramètre d'environnement comprend un second capteur de température disposé sur un côté extérieur du système de réfrigération de véhicule et configuré pour détecter une température d'environnement de travail.

5. Véhicule, **caractérisé en ce qu'**il comprend le système de réfrigération de véhicule selon l'une quelconque des revendications 1 à 4.
